# EUROPEAN PATENT APPLICATION

(11) **EP 4 836 475 A1**
(43) Date of publication of application: **04.11.2026**
(21) Application number: 23963201.1
(22) Date of filing: 28.12.2023
(51) Int. Cl.: H04W 12/069, G06F 21/33

(54) **NETWORK NODE, AND COMMUNICATION METHOD**

(71) Applicant: NTT DOCOMO, INC., Tokyo 100-6150 (JP); NTT, Inc., Tokyo 100-8116 (JP)
(72) Inventor: YAMAUCHI, Kenta, Tokyo 100-6150 (JP); KUROIWA, Fumito, Tokyo 100-6150 (JP); MAEDA, Hiroaki, Musashino-shi, Tokyo 180-8585 (JP); HIGO, Naoki, Musashino-shi, Tokyo 180-8585 (JP); MATSUMOTO, Arifumi, Musashino-shi, Tokyo 180-8585 (JP)
(74) Representative: Hoffmann Eitle
(86) International application number: PCT/JP2023/047237
(87) International publication number: WO 2025/141855

(57) **Abstract**

A network node includes: a reception unit configured to receive, from a specific network node, an authentication delegation request including a credential storing personal data of a user; a control unit configured to execute authentication processing using the credential; and a transmission unit configured to transmit an authentication result to the specific network node.

## Description

### Technical Field

The present invention relates to a network node, and a communication method in a communication system.

### Background Art

In 3GPP (registered trademark) (3rd Generation Partnership Project), a radio communication scheme called 5G or NR (New Radio) (hereinafter, this radio communication scheme is referred to as "5G" or "NR") has been introduced in order to achieve a further increase in system capacity, a further increase in data transmission speed, a further reduction in latency in a radio section, and the like. In 5G, various radio technologies have been introduced in order to satisfy the requirement of achieving a throughput of 10 Gbps or more while reducing the latency in the radio section to 1 ms or less. Furthermore, studies are also being conducted on 6G, which is a future communication system.

In recent years, as a new concept of identity management, a concept of self-sovereign identity (SSI) and technologies for implementing the concept (W3C Decentralized Identifiers (DIDs), W3C Verifiable Credentials (VCs), and the like), in which a user manages their own identifiers and identity by themself and controls the recipients to which they are provided without relying on a centralized identity provider (ID provider) or the like, have been studied.

In the world of SSI, for example, by presenting, to a service provider side, an attribute/qualification credential that proves attribute information, qualification information, and the like, a user enables the service provider side to make a decision as to whether to provide a service to the user or the like.

Further, an architecture in which a Northbound interface between an NEF (Network Exposure Function) and an AF (Application Function) in a 5G system is configured by CAPIF (Common API Framework) has been studied.

Further, ID federation technology that enables centralized management of ID information has attracted attention. It is common to use OpenID (registered trademark) Connect for ID federation. Introduction of OpenID (registered trademark) Connect into a 5G system by extending a CAPIF core function has also been studied.

### Citation List

### Non-Patent Literature

[Non-Patent Literature 1] 3GPP TS 23.502 V18.3.0 (2023-09)
[Non-Patent Literature 2] W3C Decentralized Identifiers (DIDs) v1.0, https://www.w3.org/TR/did-core/
[Non-Patent Literature 3] W3C Verifiable Credentials Data Model v1.1, https://www.w3.org/TR/vc-data-model/

### Summary of Invention

### Technical Problem

In ID federation technology such as OpenID (registered trademark) Connect, an identity provider (NW IdP) performs user authentication on behalf of a service provider. As a result, the user can use a service of the service provider.

However, the functions of the NW IdP that have been studied so far do not support user authentication based on an attribute/qualification credential and conforming to the concept of SSI. Therefore, they cannot meet a request from an external service that wishes to perform SSI-based user authentication.

The present invention has been made in view of the above points, and an object thereof is to provide a technique for realizing delegation of authentication based on an attribute/qualification credential.

### Solution to Problem

According to the disclosed technique, there is provided a network node including:
a reception unit configured to receive, from a specific network node, an authentication delegation request including a credential storing personal data of a user;
a control unit configured to execute authentication processing using the credential; and
a transmission unit configured to transmit an authentication result to the specific network node.

### Advantageous Effects of Invention

According to the disclosed technique, there is provided a technique for realizing delegation of authentication based on an attribute/qualification credential.

### Brief Description of Drawings

[FIG. 1] FIG. 1 is a diagram for explaining an example of a communication system.
[FIG. 2] FIG. 2 is a diagram for explaining an example of a communication system in a roaming environment.
[FIG. 3] FIG. 3 is a diagram illustrating an example of a system configuration common to the first and second embodiments.
[FIG. 4] FIG. 4 is a diagram for explaining a processing procedure in the first embodiment.
[FIG. 5] FIG. 5 is a diagram for explaining a processing procedure in the first embodiment.
[FIG. 6] FIG. 6 is a diagram for explaining an example of authentication processing.
[FIG. 7] FIG. 7 is a diagram illustrating an example of a functional configuration of a network node 100 according to an embodiment of the present invention.
[FIG. 8] FIG. 8 is a diagram illustrating an example of a functional configuration of a terminal 20 according to an embodiment of the present invention.
[FIG. 9] FIG. 9 is a diagram illustrating an example of a hardware configuration of the terminal 20 and the network node 100 according to an embodiment of the present invention.
[FIG. 10] FIG. 10 is a diagram illustrating an example of a configuration of a vehicle 2001 according to an embodiment of the present invention. Description of Embodiments

Embodiments of the present invention will now be described below with reference to the drawings. Note that the embodiments described below are merely examples, and embodiments to which the present invention is applied are not limited to the embodiments described below.

In the operation of the radio communication system according to the embodiment of the present invention, existing technology is appropriately used. The existing technology is, for example, existing LTE or existing NR, but is not limited thereto.

In the following, first, an example of a configuration of a 5G core network, which is an example of a network in which authentication is performed based on an attribute/qualification credential in the present embodiment, will be described, and thereafter, configurations and operations according to the present embodiment will be described.

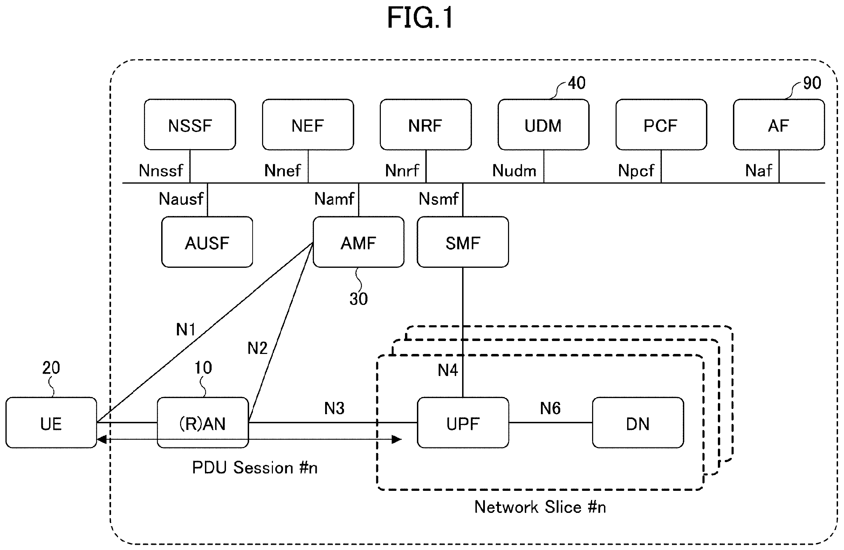

FIG. 1 is a diagram for explaining an example of a communication system corresponding to a core network. As illustrated in FIG. 1, the present communication system includes a UE, which is a terminal 20, and a plurality of network nodes. Hereinafter, one network node is assumed to correspond to each function; however, one network node may implement a plurality of functions, or a plurality of network nodes may implement one function. In addition, "connection" described below may be a logical connection or a physical connection.

A (R)AN ((Radio) Access Network) is a network node having a radio access function, may include a base station 10, and is connected to the UE 20, an AMF (Access and Mobility Management Function) 30, and a UPF (User Plane Function) 220. The AMF 30 is a network node having functions such as termination of a RAN interface, termination of NAS (Non-Access Stratum), registration management, connection management, reachability management, and mobility management. The UPF is a network node having functions such as a PDU (Protocol Data Unit) session point toward the outside that interconnects with a DN (Data Network), packet routing and forwarding, and QoS (Quality of Service) handling of the user plane. The UPF 220 and the DN constitute a network slice.

The AMF 30 is connected to the UE 20, the (R)AN 10, an SMF (Session Management Function), an NSSF (Network Slice Selection Function), an NEF (Network Exposure Function), an NRF (Network Repository Function), a UDM (Unified Data Management), an AUSF (Authentication Server Function), a PCF (Policy Control Function), and an AF (Application Function) 90. The AMF 30, the SMF, the NSSF, the NEF, the NRF, the UDM 40, the AUSF, the PCF, and the AF 90 are network nodes interconnected through service-based interfaces Namf, Nsmf, Nnssf, Nnef, Nnrf, Nudm, Nausf, Npcf, and Naf, respectively.

The SMF is a network node having functions such as session management, assignment and management of an IP (Internet Protocol) address of the UE 20, a DHCP (Dynamic Host Configuration Protocol) function, an ARP (Address Resolution Protocol) proxy, and a roaming function. The SMF may also be referred to as a session management node. The NEF is a network node 30 having a function of notifying capabilities and events to other NFs (Network Functions). The NSSF is a network node having functions such as selection of a network slice to which the UE 20 connects, determination of allowed NSSAI (Network Slice Selection Assistance Information), determination of configured NSSAI, and determination of an AMF set to which the UE 20 connects. The PCF is a network node having a function of performing policy control of the network. The AF 90 is a network node having a function of controlling an application server. The NRF is a network node having a function of discovering NF instances that provide services. The UDM 40 is a network node that manages subscriber data and authentication data. The UDM 40 is connected to a UDR (User Data Repository) that stores the data. The UDM 40 may also be referred to as a data management node.

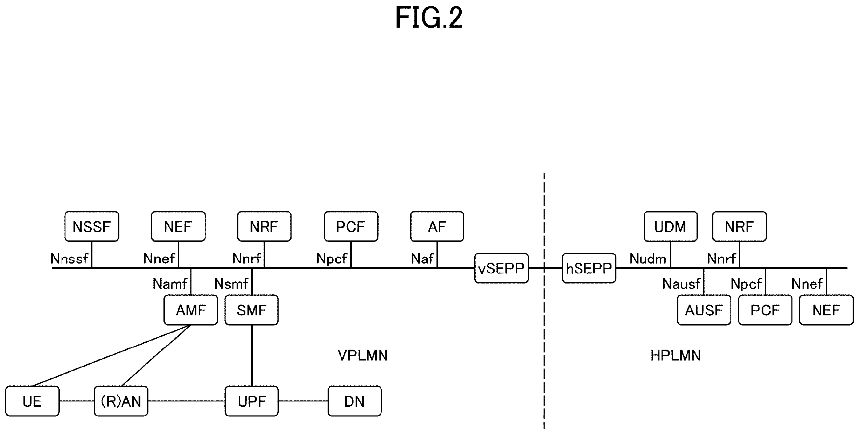

FIG. 2 is a diagram for explaining an example of a communication system in a roaming environment. As illustrated in FIG. 2, the network includes a UE, which is the terminal 20, and a plurality of network nodes.

A SEPP is a non-transparent proxy that filters control-plane messages between PLMNs (Public Land Mobile Networks). The vSEPP shown in FIG. 2 is a SEPP in a visited network, and the hSEPP is a SEPP in a home network.

As illustrated in FIG. 2, the UE 20 is in a roaming environment in which it is connected to the (R)AN and the AMF 30 in a VPLMN (Visited PLMN). The VPLMN and an HPLMN (Home PLMN) are connected via the vSEPP and the hSEPP. The UE 20 can communicate with, for example, a UDM in the HPLMN via the AMF 30 of the VPLMN.

### (Regarding SSI)

As described above, in recent years, as a new concept of identity management, a concept of self-sovereign identity (SSI) and technologies for implementing the concept (W3C Decentralized Identifiers (DIDs), W3C Verifiable Credentials (VCs), and the like), in which a user manages their own identifiers and identity by themself and controls the recipients to which they are provided without relying on a centralized identity provider (ID provider) or the like, have been studied.

In the world of SSI, there are three parties: a Holder, an Issuer, and a Verifier. A Holder is a user or the like that manages/holds its own digital identity. An Issuer issues, to a user or the like, an attribute/qualification credential (for example, a VC) after proving attribute information (name, age, address, and the like), qualification information (being an employee of a company, being a member of a service, and the like), and the like. By requesting and receiving an attribute/qualification credential necessary for providing a service from a Holder, a Verifier verifies an attribute, qualification, or the like of the Holder and determines whether to provide a service or the like.

An example of an attribute/qualification credential is a VC (Verifiable Credential). A VC is a signed document that stores personal data. The above attribute information and qualification information are examples of personal data. An attribute/qualification credential may also be referred to as a credential storing personal data. Further, the credential storing personal data does not necessarily need to include information that uniquely identifies an individual, and, for example, something like a membership card issued anonymously also corresponds to a credential storing personal data.

Further, for example, DIDs (Decentralized Identifiers) are used as identifiers of an Issuer and a Holder. A DID is registered on a distributed ledger and is easily accessible, but difficult to tamper with.

### (Regarding Problem)

As described above, in ID federation technology such as OpenID (registered trademark) Connect, an identity provider (NW IdP) performs user authentication on behalf of a service provider. As a result, the user can use a service of the service provider.

However, the functions of the NW IdP that have been studied so far do not support user authentication based on an attribute/qualification credential and conforming to the concept of SSI. Therefore, they cannot meet a request from an external service that wishes to perform SSI-based user authentication.

### (Outline of Embodiment)

In the present embodiment, in order to solve the above problem, the following functional additions, new operations, and the like are made. A 3GPP NW is assumed as the following NW (network); however, the NW to which the technique according to the present invention can be applied is not limited to a 3GPP NW.
- The NW is provided with an authentication function based on an attribute/qualification credential.

The authentication function may be a newly added network node, may be an extended AUSF, or may be an existing node other than an AUSF that has been extended.
- The NW is provided with a function of accepting an authentication delegation request message based on an attribute/qualification credential from an external service (AF).

The function may be a newly added network node, or the CAPIF authorization function may assume the function by extending the CAPIF authorization function. In the existing technology, the CAPIF authorization function performs authentication/authorization and the like for an API invoker that invokes a service API.
- When an authentication delegation request message is received by the above function, if the authentication delegation request message includes an attribute/qualification credential, the authentication function executes verification processing of the attribute/qualification credential based on the attribute/qualification credential and responds with the verification result to the external service.

In the present embodiment, an "external service" is a network node (an application server or the like) that provides a service to a user. The "external service" may also be referred to as an external service node, a service provision apparatus, or the like.

Further, the verification processing of the attribute/qualification credential corresponds to authentication processing for authenticating the user, and therefore the "verification processing" may also be referred to as "authentication processing," and the "verification result" may also be referred to as an "authentication result."
- When an authentication delegation request message is received by the above function, if the authentication delegation request message does not include an attribute/qualification credential, the authentication function transmits a message requesting an attribute/qualification credential that can be used for service authentication to the UE 20, receives the attribute/qualification credential from the UE 20, then executes verification processing of the attribute/qualification credential based on the attribute/qualification credential, and responds with the verification result to the external service.

In the present embodiment, "service authentication" means user authentication necessary for an external service to provide a service to a user.

### (Example of System Configuration)

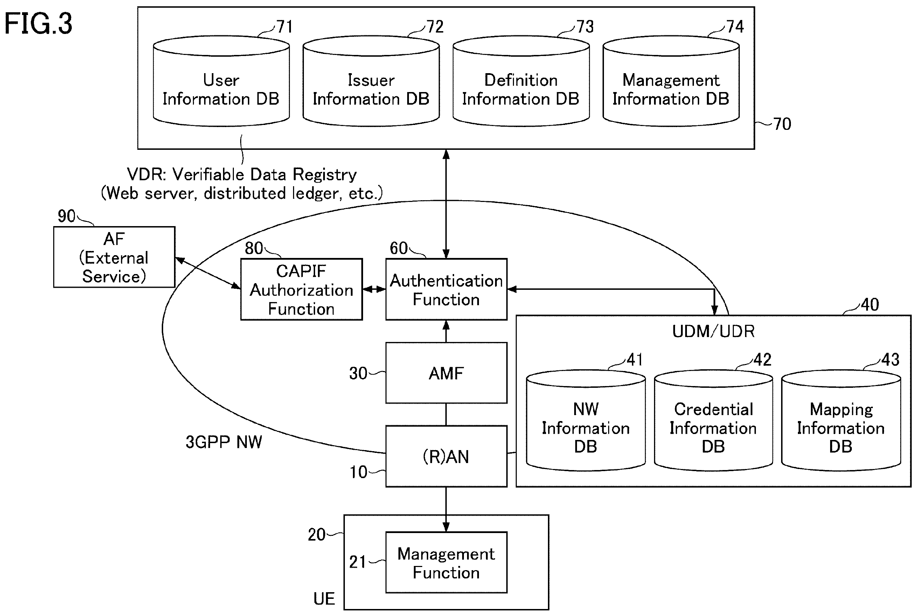

FIG. 3 illustrates an example of a system configuration according to the present embodiment. This system configuration is common to a first embodiment and a second embodiment, which will be described later.

As illustrated in FIG. 3, the communication system according to the present embodiment includes a UE 20, a (R)AN 10, an AMF 30, an authentication function 60 that performs authentication based on an attribute/qualification credential, a UDM/UDR (40), a VDR (Verifiable Data Registry) 70, a CAPIF authorization function 80, and an AF (External Service) 90. Since the UDM 40 is used together with a UDR, the notation UDM/UDR is used. The "Authentication Function 60" illustrated here may be a newly defined apparatus (network node), or may be obtained by extending the function of an existing apparatus (for example, an AUSF).

The UE 20 includes a management function 21 that manages attribute/qualification credentials. The UE 20 may also be referred to as a terminal 20. The management function 21 may include a digital identity wallet (hereinafter, referred to as a wallet) that manages, for example, a user identifier, an attribute/qualification credential, a public key/private key linked to the identifier, and the like. The wallet of the UE 20 may be provided inside the UE 20 or outside the UE 20.

As illustrated in FIG. 3, the UDM/UDR (40) includes a NW information DB 41, a credential information DB 42, and a mapping information DB 43.

The NW information DB 41 stores an identifier of a NW, a public key of the NW, and a private key of the NW. The information stored in the NW information DB 41 is used when performing NW spoofing detection based on the public key/private key of the NW and encryption of communication from the external service 90/UE 20 to the NW in exchanges between the NW and the external service 90 and in exchanges between the NW and the UE 20. When the above NW spoofing detection and communication encryption are not performed, the NW information DB 41 may be omitted.

The above NW is a 3GPP NW. For example, "identifier of the NW" (the same applies to the public key of the NW and the private key of the NW) may be an identifier common to a plurality of network nodes in the 3GPP NW, or may be an identifier used for a specific network node in the 3GPP NW.

The credential information DB 42 stores credential information (conditions to be described later, etc.) that can be used for service authentication. The mapping information DB 43 stores mapping information between a user-contact mapping identifier and user contact information.

The user-contact mapping identifier is, for example, any one or any plurality of a DID, a telephone number, and a SUPI. The user contact information is, for example, communication endpoint information of the user's wallet, a telephone number to which an SMS can be sent to the user, and the like.

In the present embodiment, the VDR 70 is disposed outside the 3GPP NW. The VDR 70 is an apparatus that can be realized by a Web server, a distributed ledger, or the like. The VDR 70 includes a user information DB 71, an issuer information DB 72, a definition information DB 73, and a management information DB 74.

The user information DB 71 stores a user's identifier and the user's public key. The issuer information DB 72 stores an identifier of an issuer of an attribute/qualification credential used for service authentication and the public key of the issuer. The definition information DB 73 stores a schema and definition information of the attribute/qualification credential. The management information DB 74 stores management information indicating validity/revocation of the attribute/qualification credential.

The configuration is not limited to one in which the VDR 70 is disposed outside the 3GPP NW as illustrated in FIG. 3, and the VDR 70 may be provided inside the 3GPP NW. Further, a plurality of types of VDRs 70 may be provided. For example, when a DID is used as a user identifier, a VDR 70 may be provided for each DID method. Further, separate VDRs 70 may be provided for respective credentials.

In the present embodiment, "user" and "UE" (or "terminal") may be used synonymously. Unless a contradiction arises in context, "user" described below may be replaced with "UE" or "terminal." Conversely, "UE" or "terminal" may be replaced with "user."

### (First Embodiment)

First, the first embodiment will be described. The first embodiment is an embodiment in which a 3GPP NW receives a user identifier and an attribute/qualification credential from an external service 90 and performs only verification processing thereof on behalf of the external service 90.

The above user identifier is used to verify that the attribute/qualification credential belongs to the user themself who transmitted the attribute/qualification credential (used as linking information with the attribute/qualification credential), and is, for example, a DID or the like. For example, when service authentication using an anonymous attribute/qualification credential is permitted, the user identifier may be omitted.

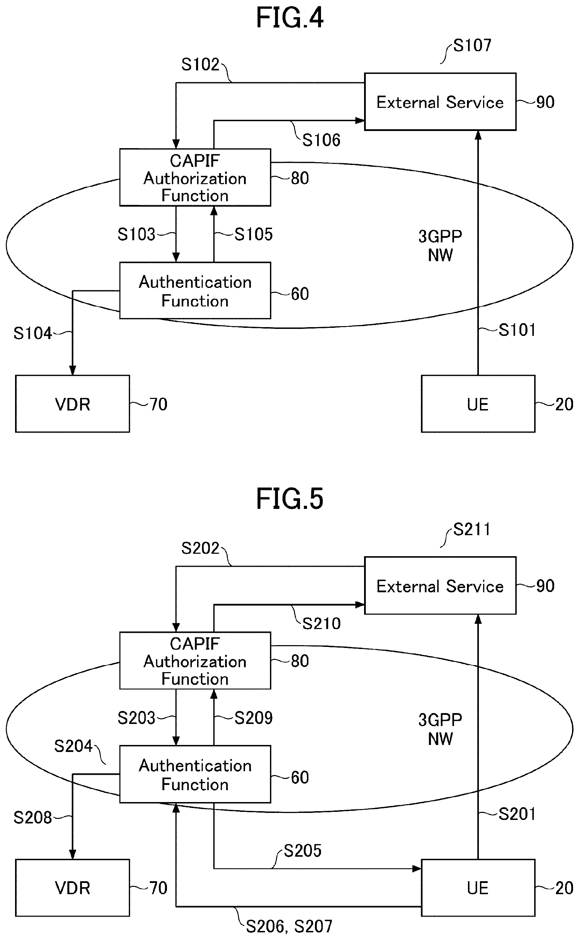

A processing procedure of the first embodiment will be described with reference to FIG. 4. In the following processing procedure, it is assumed that the UE 20 includes a wallet and that an attribute/qualification credential or the like is read out from the wallet in the UE 20.

### <S101>

In S101 (step 101), the external service 90 acquires a user identifier and an attribute/qualification credential from the UE 20.

### <S102>

In S102, the external service 90 transmits, to the CAPIF authorization function 80, an authentication delegation request including the user identifier and the attribute/qualification credential. The authentication delegation request is a request for causing the authentication function 60 to perform, on behalf of the external service 90, authentication necessary for providing a service to the user.

### <S103>

In S103, the CAPIF authorization function 80 forwards the authentication delegation request to the authentication function 60.

### <S104>

In S104, the authentication function 60 verifies "validity, authenticity, and eligibility" of the user identifier and the attribute/qualification credential by using the VDR 70. A specific example of the verification will be described later.

### <S105>

In S105, the authentication function 60 responds to the CAPIF authorization function 80 with a verification result (OK/NG or the like).

### <S106>

In S106, the CAPIF authorization function 80 responds to the external service 90 with the verification result (OK/NG or the like).

### <S107>

In S107, when the external service 90 confirms that the verification result is OK, the external service 90 determines that service authentication has succeeded, and provides a service to the user (UE 20).

According to the first embodiment described above, it becomes possible to realize delegation of authentication based on an attribute/qualification credential.

### (Second Embodiment)

Next, the second embodiment will be described. In the second embodiment, the authentication function 60 receives an authentication delegation request including an identifier linked to a user contact address, accesses the user based on the identifier, acquires an attribute/qualification credential from the user, and performs verification processing.

A processing procedure of the second embodiment will be described with reference to FIG. 5.

### <S201>

In S201, the external service 90 acquires a user identifier from the UE 20.

### <S202>

In S202, the external service 90 transmits, to the CAPIF authorization function 80, an authentication delegation request including a user-contact mapping identifier. This user-contact mapping identifier is an identifier used for identifying the same user between the external service 90 and the NW side. As the identifier, in addition to a DID, a telephone number, a SUPI, or the like can be used.

With respect to the above user-contact mapping identifier, the user identifier acquired by the external service 90 from the UE 20 in S201 may itself be the user-contact mapping identifier. Further, the external service 90 may hold a DB for mapping in advance, and may extract the user-contact mapping identifier from the DB based on the user identifier acquired in S201.

Further, in S202, the external service 90 may include, in the authentication delegation request, credential information (conditions and the like) that can be used for service authentication. The credential information is used by the authentication function 60 for requesting an attribute/qualification credential from the user and is also used for verification processing of the attribute/qualification credential.

When the authentication delegation request does not include credential information, for example, credential information (conditions and the like) that can be used for service authentication and that has been agreed upon in advance between the NW and the external service 90 is held in the NW (for example, in the UDM/UDR 40). In the NW, this credential information can be held for each external service.

Regarding determination of a condition for an attribute/qualification credential used for service authentication, the NW may determine the condition, or the external service 90 may determine the condition. Examples of the condition are as follows. The condition includes any one or any plurality of the following five items of information. Further, the condition may include information other than the following five items of information. It is assumed that a My Number VC is information equivalent to the current My Number converted into VC format.
- Type of credential (My Number VC, etc.)
- Data format/encoding format of credential (W3C VC, JWT, etc.)
- Information to be included in the credential (name, age, etc.)
- Signature algorithm or signature format
- Version

### <S203>

In S203, the CAPIF authorization function 80 forwards the authentication delegation request to the authentication function 60.

### <S204>

In S204, by referring to the mapping information DB 43, the authentication function 60 identifies a user contact address (for example, a telephone number to which an SMS can be sent, a communication endpoint of the user's wallet, or the like) from the user-contact mapping identifier. The user-contact mapping identifier itself may be information indicating the user's contact address. In this case, the authentication function 60 accesses the user by using the user-contact mapping identifier itself.

### <S205>

In S205, the authentication function 60 requests, from the user (UE 20 in the example of FIG. 5), an attribute/qualification credential that can be used for service authentication, by using the contact address identified in S204.

### <S206, S207>

In S206, it is assumed that the above request is confirmed by the user (person) and that agreement (approval) for providing the attribute/qualification credential is obtained. S206 may be omitted.

In S207, the UE 20 responds to the authentication function 60 with the requested attribute/qualification credential. The authentication function 60 receives the attribute/qualification credential.

In S205, the authentication function 60 may additionally request, from the UE 20, a user identifier (for example, a DID) linked to the attribute/qualification credential and used to verify that the attribute/qualification credential received in S207 belongs to the user themself who is the communication partner.

### <S208>

In S208, the authentication function 60 verifies "validity, authenticity, and eligibility" of the user identifier and the attribute/qualification credential by using the VDR 70. A specific example of the verification will be described later.

### <S209>

In S209, the authentication function 60 responds to the CAPIF authorization function 80 with a verification result (OK/NG or the like).

### <S210>

In S210, the CAPIF authorization function 80 responds to the external service 90 with the verification result (OK/NG or the like).

In S209, the authentication function 60 may include, in the response message to the CAPIF authorization function 80, a user's attribute/qualification credential or a user's identifier (or both the attribute/qualification credential and the identifier). In S210, the CAPIF authorization function 80 may include, in the response message to the external service 90, the user's attribute/qualification credential or the user's identifier (or both the attribute/qualification credential and the identifier) received from the authentication function 60.

### <S211>

In S211, when the external service 90 confirms that the verification result is OK, the external service 90 determines that service authentication has succeeded, and provides a service to the user.

### <Supplement Regarding S205 to S207>

More specifically, the following procedure may be executed with respect to S205 to S207.

In S205, the authentication function 60 transmits, to the AMF 30, a message requesting an attribute/qualification credential. The AMF 30 forwards the message received from the authentication function 60 to the (R)AN 10. The (R)AN 10 forwards the message to the UE 20. The message includes a condition for an attribute/qualification credential necessary for service authentication.

In S206, the UE 20 displays, on a display, information included in the message received from the (R)AN 10, and the user of the UE 20 confirms the condition of the requested attribute/qualification credential.

When the user agrees to provide the information, in S207, the UE 20 transmits a response message including the requested attribute/qualification credential (for example, a VC). A signature (for example, a VP) generated by the UE 20 using the private key corresponding to the user's identifier is added to the response message.

In the above example, the user (person) confirms the condition; however, the UE 20 may automatically confirm the condition.

The (R)AN 10, having received the response message, forwards the response message to the AMF 30. The AMF 30 forwards the response message to the authentication function 60.

The processing procedure of the second embodiment has been described above. In the above description, it is assumed that the user is a subscriber of the 3GPP NW; however, the user does not necessarily need to be a subscriber of the 3GPP NW. When the user is a non-subscriber, for example, the external service 90 transmits, in the authentication delegation request message in S202, the user's contact address, such as the user's telephone number or the communication endpoint of the wallet. As a result, the authentication function 60 in the 3GPP NW can identify the user's contact address.

According to the second embodiment described above, it becomes possible to realize delegation of authentication based on an attribute/qualification credential.

### (Specific Example of Authentication/Verification Processing)

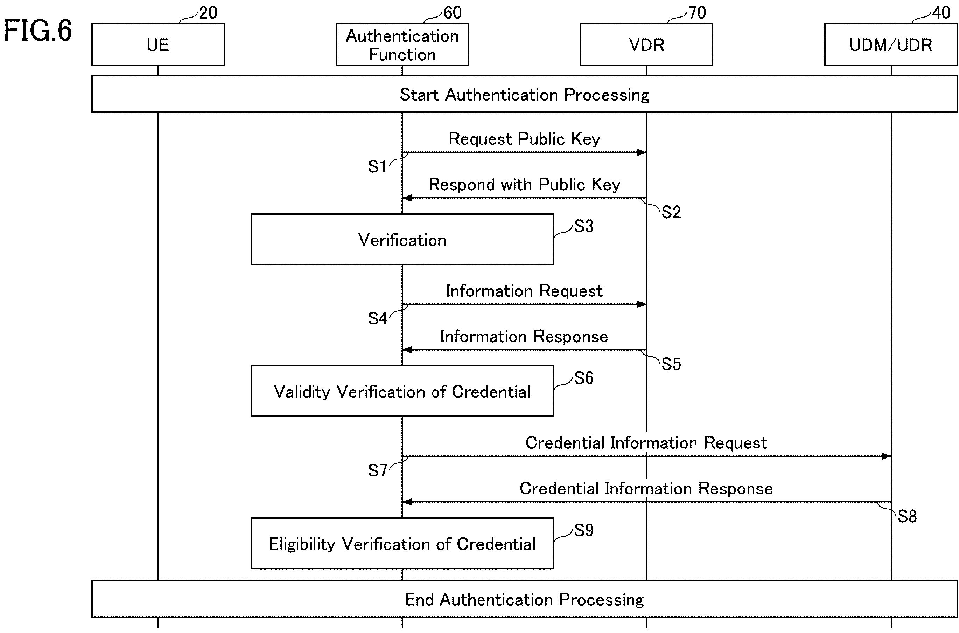

A specific example of authentication/verification processing of an attribute/qualification credential executed by the authentication function 60 in S104 of the first embodiment and in S208 of the second embodiment will be described with reference to FIG. 6. Here, as an example of authentication/verification processing logic, it is assumed that a W3C DID/VC/VP-format attribute/qualification credential is verified. However, using verification logic for a W3C DID/VC/VP-format attribute/qualification credential is merely an example, and authentication/verification processing may be performed using logic other than this.

When authentication processing using an attribute/qualification credential is started, in S1, the authentication function 60 requests, from the VDR 70, a public key corresponding to an identifier of a credential issuer (Issuer) and a public key corresponding to an identifier of the user. In S2, the VDR 70 responds to the authentication function 60 with these public keys.

In S3, the authentication function 60 verifies the authenticity of each of the signature of the credential issuer and the signature of the user and verifies that no message tampering has occurred.

Communication between the authentication function 60 inside the 3GPP NW and the VDR 70 outside the 3GPP NW may be performed via a node (for example, an NEF or an SCEF) that mediates exchanges between the authentication function 60 inside the 3GPP NW and the VDR 70 outside the 3GPP NW.

More specifically, with respect to S1 to S3, in S1 and S2, the authentication function 60 uses DID0 (identifier of the credential issuer) and DID1 (identifier of the user), included in the received VP/VC, as inputs, and acquires (resolves), from the VDR 70, a DID Document (public key) corresponding to DID0 and a DID Document (public key) corresponding to DID1 by using an arbitrary DID method. In S3, the authentication function 60 verifies that the Holder signature of the VP and the Issuer signature of the VC are each signatures generated by the private key linked to the corresponding public key (authenticity of the signature and absence of message tampering).

In S4, the authentication function 60 requests, from the VDR 70, information regarding the format and status (revocation status and the like) of the credential. In S5, the VDR 70 responds with the format and status information of the credential. In S6, the authentication function 60 performs validity verification of the credential.

More specifically, with respect to S4 to S6, the authentication function 60 acquires, from the VDR 70, VC schema, definition information, and the like, and verifies that the syntax and the like of the VC are correct. Further, the authentication function 60 acquires, from the VDR 70, validity information/revocation information of the VC, and verifies that the received VC is valid.

In S7, the authentication function 60 requests, from the UDM/UDR (40), credential information that can be used for service authentication, and in S8, the UDM/UDR (40) responds with the credential information. In S9, the authentication function 60 performs eligibility verification of the credential. More specifically, the authentication function 60 verifies that conditions for a VC that can be used for service authentication (for example, that it is a My Number VC and that necessary information (for example, a name and address) is included) are satisfied. When the authentication function 60 can acquire the credential information by a method other than S7 and S8, for example, when the external service 90 includes the credential information in the authentication delegation request, S7 and S8 may be omitted.

When the authentication function 60 determines that all of the above verification results are OK, it determines that authentication has succeeded.

### (Apparatus Configuration)

Next, examples of functional configurations of the "authentication function 60, CAPIF authorization function, and the like" and the terminal 20 (UE 20), which execute the processing and operations described so far, will be described. Hereinafter, the network node such as the authentication function 60 and the CAPIF authorization function is collectively referred to as a "network node 100."

### <Network Node 100>

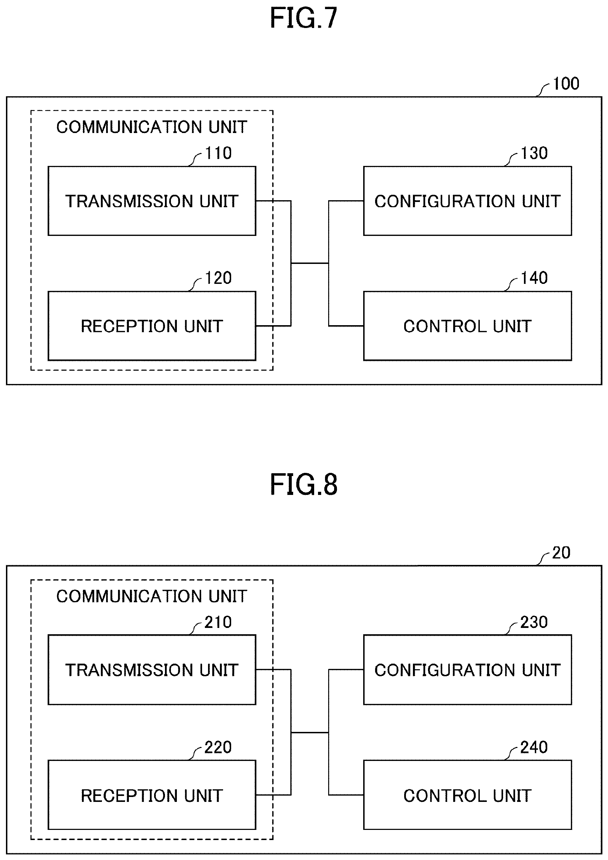

FIG. 7 is a diagram illustrating an example of a functional configuration of the network node 100.

As illustrated in FIG. 7, the network node 100 includes a transmission unit 110, a reception unit 120, a configuration unit 130, and a control unit 140. The functional configuration illustrated in FIG. 7 is merely an example. As long as the operation according to the embodiment of the present invention can be executed, the functional classification and the names of the functional units may be arbitrary.

The transmission unit 110 includes a function of generating a signal to be transmitted to the terminal 20 or another network node and transmitting the signal by wire or wirelessly. The reception unit 120 includes a function of receiving various signals transmitted from the terminal 20 or another network node and acquiring, from the received signals, information of, for example, a higher layer. A communication unit including the transmission unit 110 and the reception unit 120 may be configured.

The configuration unit 130 stores, in a storage device, configuration information set in advance and various types of configuration information to be transmitted to the terminal 20, and reads them out from the storage device as necessary. The control unit 140 controls the network node 100. A functional unit relating to signal transmission in the control unit 140 may be included in the transmission unit 110, and a functional unit relating to signal reception in the control unit 140 may be included in the reception unit 120. Note that the transmission unit 110 and the reception unit 120 may also be referred to as a transmitter and a receiver, respectively.

### <Terminal 20>

FIG. 8 is a diagram illustrating an example of a functional configuration of the terminal 20. As illustrated in FIG. 8, the terminal 20 includes a transmission unit 210, a reception unit 220, a configuration unit 230, and a control unit 240. The functional configuration illustrated in FIG. 8 is merely an example. As long as the operation according to the embodiment of the present invention can be executed, the functional classification and the names of the functional units may be arbitrary.

The transmission unit 210 generates a transmission signal from transmission data and transmits the transmission signal wirelessly. The reception unit 220 wirelessly receives various signals and acquires a higher-layer signal from a received physical-layer signal. The reception unit 220 also has a function of receiving an NR-PSS, an NR-SSS, an NR-PBCH, a DL/UL control signal, a reference signal, or the like transmitted from a base station A communication unit including the transmission unit 210 and the reception unit 220 may be configured.

The configuration unit 230 stores, in a storage device, various types of configuration information received from the base station and the like by the reception unit 220, and reads them out from the storage device as necessary. The configuration unit 230 also stores configuration information set in advance.

The control unit 240 controls the terminal 20. A functional unit relating to signal transmission in the control unit 240 may be included in the transmission unit 210, and a functional unit relating to signal reception in the control unit 240 may be included in the reception unit 220. Note that the transmission unit 210 and the reception unit 220 may also be referred to as a transmitter and a receiver, respectively.

### (Hardware Configuration)

The block diagrams (FIGS. 7 and 8) used in the description of the embodiment described above illustrate the block of functional units. Such functional blocks (configuration parts) are attained by at least one arbitrary combination of hardware and software. In addition, an attainment method of each of the functional blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmission unit or the transmitter. As described above, the attainment method thereof is not particularly limited.

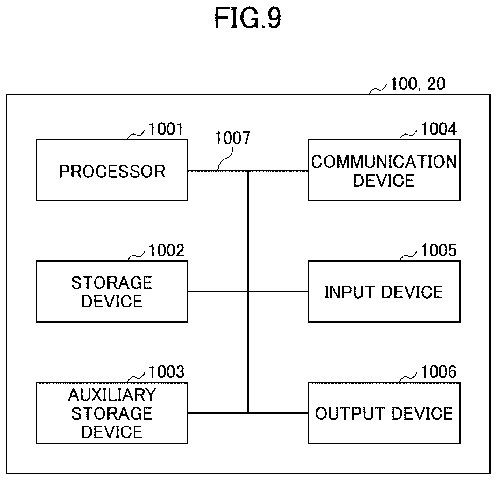

For example, the network node 100, and the terminal 20 and the like in one embodiment of this disclosure may function as a computer for performing the processing of a radio communication method of this disclosure. FIG. 9 is a diagram illustrating an example of a hardware configuration of the network node 100 and the terminal 20 and the like according to one embodiment of this disclosure. The network node 100 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the network node 100 and the terminal 20 and the like may be configured to include one or a plurality of apparatuses illustrated in the drawings, or may be configured not to include a part of the apparatuses.

Each function of the network node 100 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the network node 100 shown in FIG. 7 may be attained by a control program that is stored in the storage device 1002 and is operated by the processor 1001. Also, for example, the control unit 240 of the terminal 20 shown in FIG. 8 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wired network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and reception unit, a transmission path interface, and the like may be attained by the communication device 1004. In the transmitting and reception unit, the transmission unit and the reception unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the network node 100 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

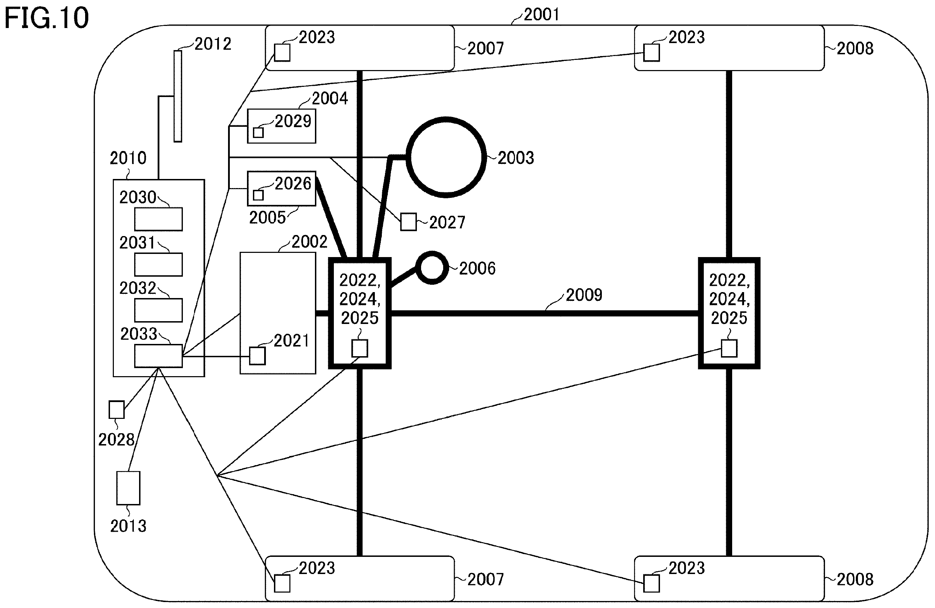

FIG. 10 shows a configuration example of a vehicle 2001. As shown in FIG. 10, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The aspect/embodiment described in the present disclosure may be applied to a communication apparatus mounted on the vehicle 2001, and may be applied to, for example, the communication module 2013. For example, the network nodes 100, or the terminal 20, may be included in the communication module 2013.

The drive unit 2002 may include, for example, an engine, a motor, and a hybrid of an engine and a motor. The steering unit 2003 includes at least a steering wheel and is configured to steer at least one of the front wheels and the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, etc.) that receives input from external sources and may also include an output device (for example, a display, a speaker, an LED lamp, a touch panel, etc.) that provides output to external destinations.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a terminal, a network node, or the like.

The communication module 2013 may transmit at least one of, signals from the various sensors 2021 to 2028 described above input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that receives an input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on the PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

Further, when the communication module 2013 includes the network node 100 (or the terminal 20), the communication module 2013 can execute the operation of the network node 100 (or the terminal 20) described above.

The present specification discloses at least the configurations according to Supplementary Note below.

### <Supplementary Notes>

### (Clause 1)

A network node including:
a reception unit configured to receive, from a specific network node, an authentication delegation request including a credential storing personal data of a user;
a control unit configured to execute authentication processing using the credential; and
a transmission unit configured to transmit an authentication result to the specific network node.

### (Clause 2)

The network node according to Clause 1,
wherein the authentication delegation request is a request for causing the network node to perform, on behalf of an external service node, authentication for providing a service to the user.

### (Clause 3)

A network node including:
a reception unit configured to receive, from a specific network node, an authentication delegation request relating to authentication for providing a service to a user;
a control unit configured to execute authentication processing using a credential storing personal data of the user, wherein the credential is acquired based on a request to the user; and
a transmission unit configured to transmit an authentication result to the specific network node.

### (Clause 4)

The network node according to Clause 3,
wherein the control unit acquires a contact address of the user by using an identifier included in the authentication delegation request, and transmits the request to the user by using the contact address.

### (Clause 5)

A communication method executed by a network node, the communication method including:
receiving, from a specific network node, an authentication delegation request including a credential storing personal data of a user;
executing authentication processing using the credential; and
transmitting an authentication result to the specific network node.

### (Clause 6)

A communication method executed by a network node, the communication method including:
receiving, from a specific network node, an authentication delegation request relating to authentication for providing a service to a user;
executing authentication processing using a credential storing personal data of the user, wherein the credential is acquired based on a request to the user; and
transmitting an authentication result to the specific network node.

According to any one of Clauses 1 to 6, a technique for realizing delegation of authentication based on an attribute/qualification credential is provided. According to Clause 2, authentication delegation can be executed based on a clear authentication delegation request. According to Clause 4, a network node can acquire the credential from the user.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the network node 100 and the terminal 20 have been described by using a functional block diagram, but such an apparatus may be attained by hardware, software, or a combination thereof. Each of software that is operated by a processor of the network node 100 and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G), xth generation mobile communication system (xG) (xG, where x is, for example, an integer or a decimal), FRA (Future Radio Access),NR (New Radio), New Radio Access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, generated, or specified on the basis thereof. In addition, a combination of a plurality of systems (for example, a combination of at least 5G and one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Specific operations that are described in the present specification as being performed by the base station 10 ((R)AN 10) may in some cases be performed by an upper node thereof. In a network including one or more network nodes having the base station 10, it is clear that various operations performed for communication with the terminal 20 may be performed by at least one of the base station 10 and another network node other than the base station 10 (for example, an MME or an S-GW, but not limited thereto). Although the above has exemplified a case where the number of other network nodes other than the base station 10 is one, the other network node may be a combination of a plurality of other network nodes (for example, an MME and an S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), and at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In the present disclosure, the terms "Mobile Station (MS)", "user terminal", "User Equipment (UE)", "terminal", and the like may be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station (terminal 20) may be referred to as a transmitting apparatus, a receiving apparatus, a communication apparatus, and the like. Note that, at least one of the base station and the mobile station may be a device that is mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. Moreover, the mobile object may be an autonomous mobile object that operates based on operation commands. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

Further, in the present disclosure, the base station may be read as the user terminal. For example, the various aspects/embodiments of the present disclosure may be applied to a configuration in which communication between a base station and a user terminal is replaced with communication between a plurality of terminals 20 (which may also be referred to as D2D (Device-to-Device), V2X (Vehicle-to-Everything), or the like). In this case, the terminal 20 may have the functions of the base station 10 described above. Further, terms such as "uplink" and "downlink" may be read as terms corresponding to terminal-to-terminal communication (for example, "side"). For example, an uplink channel, a downlink channel, and the like may be read as a side channel.

Similarly, in the present disclosure, the user terminal may be read as the base station. In this case, the base station may have the functions of the user terminal described above.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first", "second", and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be an exclusive-OR.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure. Description of Symbols

10 Base Station ((R)AN)
20 Terminal (UE)
21 Management Function
30 AMF
40 UDM
41 NW Information DB
42 Credential Information DB
43 Mapping Information DB
60 Authentication Function
70 VDR
71 User Information DB
72 Issuer Information DB
73 Definition Information DB
74 Management Information DB
80 CAPIF Authorization Function
100 Network Node
110 Transmission Unit
120 Reception Unit
130 Configuration Unit
140 Control Unit
210 Transmission Unit
220 Reception Unit
230 Configuration Unit
240 Control Unit
1001 Processor
1002 Storage Device
1003 Auxiliary Storage Device
1004 Communication Device
1005 Input Device
1006 Output Device

## Claims

1. A network node comprising:
a reception unit configured to receive, from a specific network node, an authentication delegation request including a credential storing personal data of a user;
a control unit configured to execute authentication processing using the credential; and
a transmission unit configured to transmit an authentication result to the specific network node.

2. The network node as claimed in claim 1,
wherein the authentication delegation request is a request for causing the network node to perform, on behalf of an external service node, authentication for providing a service to the user.

3. A network node comprising:
a reception unit configured to receive, from a specific network node, an authentication delegation request relating to authentication for providing a service to a user;
a control unit configured to execute authentication processing using a credential storing personal data of the user, wherein the credential is acquired based on a request to the user; and
a transmission unit configured to transmit an authentication result to the specific network node.

4. The network node as claimed in claim 3,
wherein the control unit acquires a contact address of the user by using an identifier included in the authentication delegation request, and transmits the request to the user by using the contact address.

5. A communication method executed by a network node, the communication method comprising:
receiving, from a specific network node, an authentication delegation request including a credential storing personal data of a user;
executing authentication processing using the credential; and
transmitting an authentication result to the specific network node.

6. A communication method executed by a network node, the communication method comprising:
receiving, from a specific network node, an authentication delegation request relating to authentication for providing a service to a user;
executing authentication processing using a credential storing personal data of the user, wherein the credential is acquired based on a request to the user; and
transmitting an authentication result to the specific network node.
